# EUROPEAN PATENT SPECIFICATION

(11) **EP 2 500 125 B1**
(45) Date of publication and mention of the grant of the patent: **04.03.2020**
(21) Application number: 10829901.7
(22) Date of filing: 08.11.2010
(51) Int. Cl.: B23D 47/00, B23D 45/16, B27B 9/00, B27G 3/00, B23D 59/00

(54) **CUTTING MACHINE WITH A DUST COLLECTOR**
SCHNEIDEMASCHINE MIT EINEM STAUBFÄNGER
UNE MACHINE DE DÉCOUPE AVEC UN COLLECTEUR DE POUSSIÈRE

(30) Priority: 11.11.2009 JP 2009257961
(43) Date of publication of application: 19.09.2012
(73) Proprietor: Makita Corporation, Anjo-shi, Aichi 446-8502 (JP)
(72) Inventor: TAKAHAGI Koji, Anjo-shi Aichi 446-8502 (JP)
(74) Representative: Kramer Barske Schmidtchen Patentanwälte PartG mbB
(86) International application number: PCT/JP2010/069808
(87) International publication number: WO 2011/058942

(56) References cited:
- GB-A- 1 468 096
- GB-A- 2 362 128
- JP-A- S5 662 101
- JP-A- H08 309 616
- JP-U- 52 047 380
- JP-U- 56 109 819
- JP-U- 60 127 902
- JP-U- S63 121 503
- JP-U- S63 179 020

## Description

### Technical Field

The present invention relates to a cutting machine according to the preamble of claim 1, such a cutting machine is known from JPS63121503U.

### Background Art

The aforementioned portable cutting machine is provided with a cutting machine main body including a circular saw blade rotated by an electric motor and a base supporting the cutting machine main body with respect to the material to be cut such that the cutting machine main body overlaps the upper surface of the material to be cut, and a user can perform a cutting operation by holding and moving the cutting machine on the material to be cut and causing the saw blade protruding to the lower surface side of the base to cut into the material to be cut.

When a cutting process is performed with the use of such a cutting machine, powder generated by cutting is blown upwards as the saw blade rotates. For this reason, the upper surface side of the base of the saw blade is covered with a blade case to prevent powder generated by cutting from being scattered, and a dust collecting bag for collecting the dust blown upwards is connected to the blade case, or a dust collecting device is connected thereto via a hose.

On the other hand, the circumference of the saw blade is covered with a movable cover, which can be opened and closed, on the lower surface side of the base except for the part cutting into the material to be cut. The tip end side of the movable cover is made to contact with the end surface of the material to be cut on the cutting side, the cutting machine is made to move in the cut proceeding direction in the contact state, and the movable cover is thus relatively and gradually opened and brought to a fully opened state when the cutting process has proceeded by a predetermined distance.

Since a part of the circumference of the saw blade is covered with the movable cover on the lower surface side of the base, the movable cover can receive powder dust, which cannot be collected on the upper surface side of the base and is blown to the lower surface side of the base due to the rotation of the saw blade, so that it is possible to prevent the powder dust from being dispersed, and to thereby provide a certain dust collecting function to the movable cover, on this point.

### Summary

### Problems to be solved

However, since the movable cover is gradually opened and an exposure range of the saw blade is increased as the cutting operation proceeds as described above, it is difficult to provide a sufficient dust collecting function. In the related art, there is a technique disclosed in JP 2002-210702 A, for example, as a technique for collecting dust on the lower surface side of the base (the lower surface side of the material to be cut). The patent literature discloses a dust collecting ruler in which an upper plate and a lower plate are attached to a ruler for guiding a cutting machine main body, so that a cutting operation is performed in a state where a material to be cut is held between both plates. The upper surface of the lower plate is provided with a plurality of ribs to form a small gap between the upper surface of the lower plate and the lower surface of the material to be cut, and it is possible to collect dust on the lower surface side of the material to be cut with the use of the gap. However, the dust collecting ruler is designed to be used as a separated device from the cutting machine, and therefore, cannot be handled conveniently. In addition, since the dust collecting ruler is designed to be used in a state where a material to be cut is held between the upper plate and the lower plate on one side (the right side or the left side) with respect to the saw blade, it is difficult to collect cut dust generated on the side opposite to the cutting blade.

GB 1 468 096 A discloses a cutting machine comprising a dust collecting device. JP S56-62101 A discloses a cutting machine comprising a dust collecting device.

The present teachings have been made in view of such problems in the related art, and is aimed to provide an attachment type dust collecting device capable of being mounted to a cutting machine and handled integrally therewith, mainly in order to enhance convenience in handling and effectively collect cutting powder generated on both sides of the cutting blade on the lower surface side of the base.

### Means for Solving the Problems

The above problems are solved by providing a cutting machine according to claim 1.

### Brief Description of Drawings

[Fig. 1] Fig. 1 is an overall perspective view of a cutting machine provided with a dust collecting device according to an embodiment.
[Fig. 2] Fig. 2 is a view as viewed in a direction of arrow (II) in Fig. 1 and showing a front view of the cutting machine.
[Fig. 3] Fig. 3 is a view as viewed in a direction of arrow (III) in Fig. 2 and showing a plan view of the cutting machine.
[Fig. 4] Fig. 4 is a view as viewed in a direction of arrow (IV) in Fig. 2 ad showing a side view of the cutting machine when viewed from a rear side in the cut proceeding direction.
[Fig. 5] Fig. 5 is a view as viewed in a direction of arrow (V) in Fig. 2 and showing a side view of the cutting machine when viewed from a front side in the cut proceeding direction.
[Fig. 6] Fig. 6 is a cross-sectional view taken along line (VI)-(VI) in Fig. 2 and showing a view of the rear side of the cutting machine in the direction of the cut proceeding direction when viewed from the center of tilting movement of a powder dust receiver.

### Mode for Carrying Out the Teachings

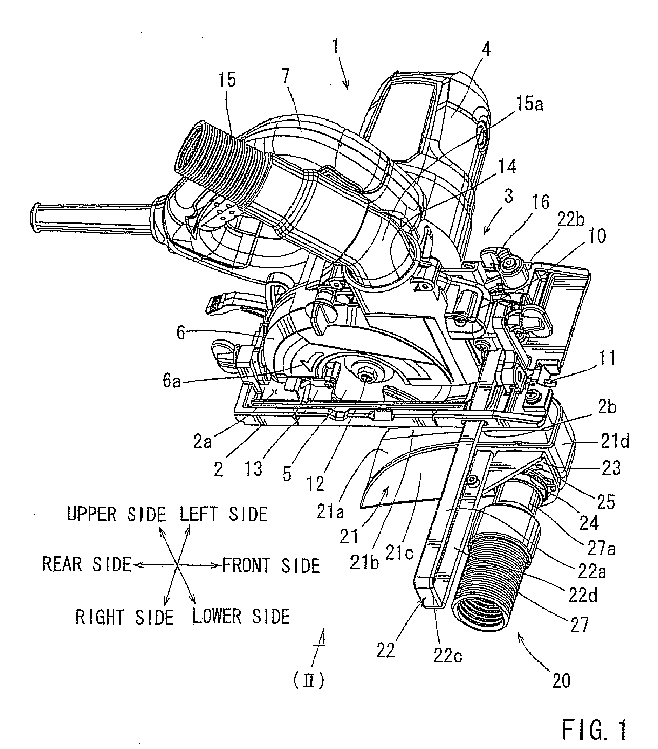

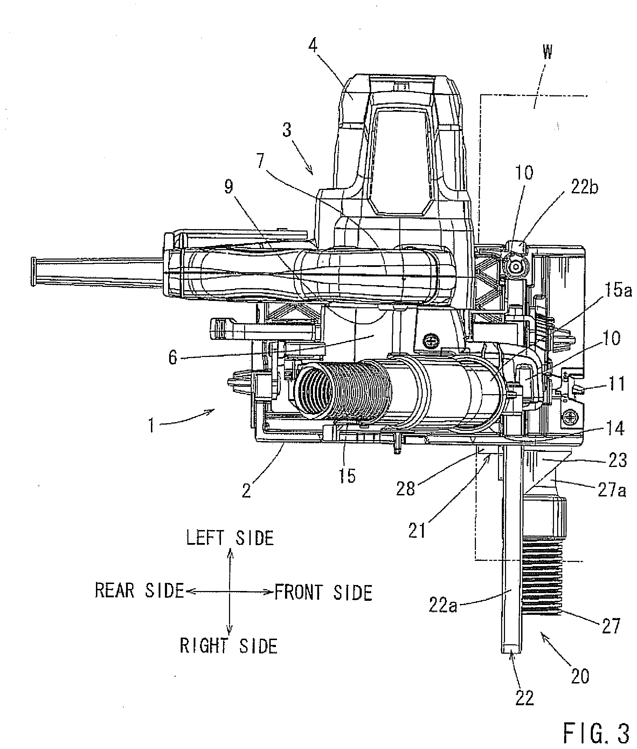

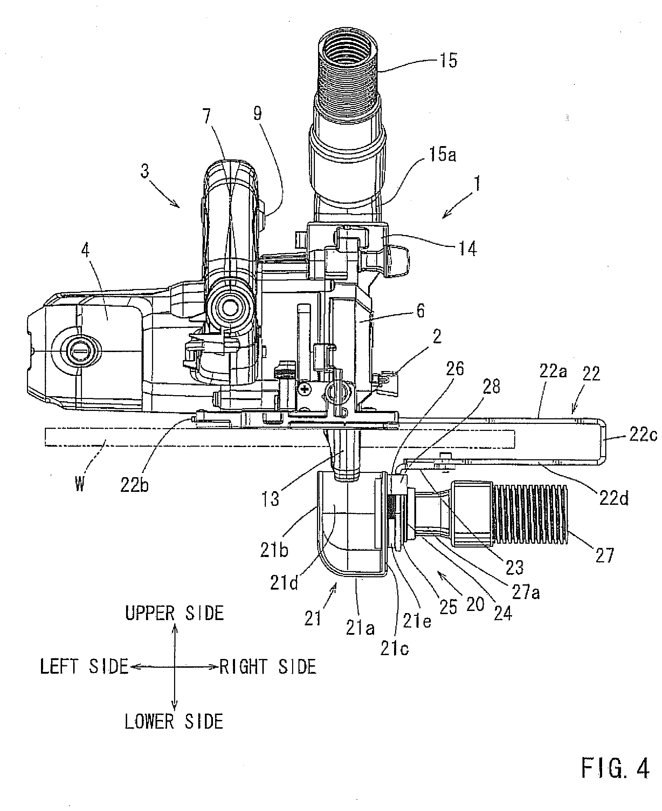

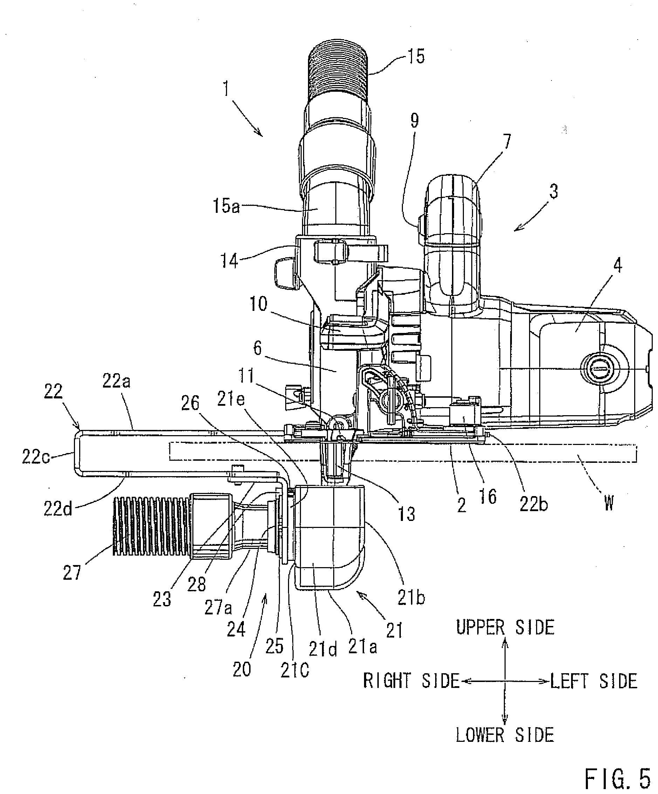

Next, description will be given of an embodiment of the present teachings based on Figs. 1 to 6. Figs. 1 to 5 show an overall configuration of a portable cutting machine 1 provided with a dust collecting device 20 according to this embodiment. The configuration of the cutting machine 1 itself is conventionally known, except for the dust collecting device 20, and description thereof will briefly be given since modifications are not particularly needed in this embodiment.

In addition, the user is positioned on the rear side of the cutting machine 1 in Fig. 1. In the following description, each of the front and rear, left and right, and up and down directions is defined with reference to the position of the user. Each direction is shown in the drawings.

The cutting machine 1 is provided with a rectangular planer plate-shaped base 2, which is to be placed on the upper surface of a material W to be cut, and a cutting machine main body 3 supported on the upper surface of the base 2. The cutting machine main body 3 is provided with an electric motor 4 as a driving source and a circular cutting blade 5 rotated by the electric motor 4. The circumference of the cutting blade 5 is covered with a main body case 6. The cutting blade 5 is attached to a spindle 12 supported by the main body case 6. The cutting blade 5 is rotated in the counterclockwise direction as indicated by arrow 6a that is shown on the main body case 6.

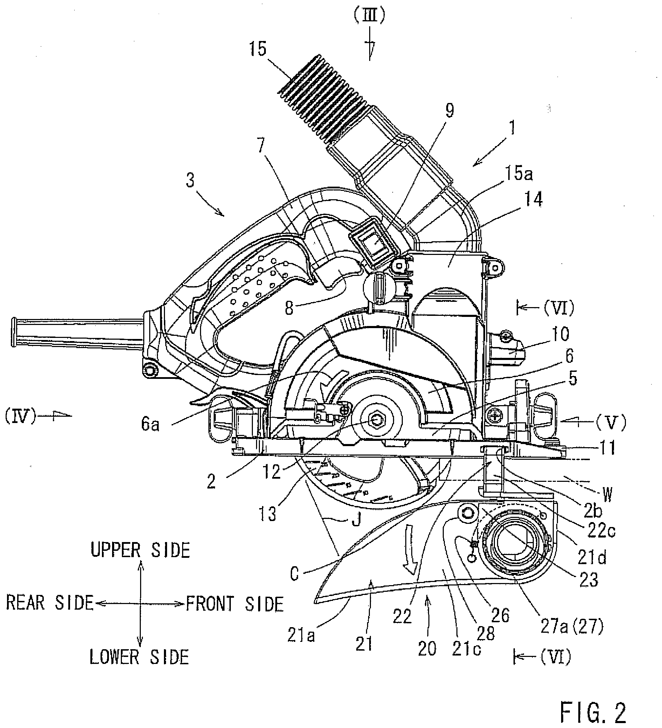

The electric motor 4 is attached to the back surface side (the left surface side) of the main body case 6. On the upper surface of the electric motor 4, a loop-shaped handle portion 7 is provided. As shown in Fig. 2, a trigger type switch lever 8, which is pulled and operated by the fingers of a user, is arranged on the inner circumferential side of the handle portion 7. If the switch lever 8 is pulled and operated, the electric motor 4 is activated, and the cutting blade 5 is rotated. On the front and right side surface of the handle portion 7 near the front side of the switch lever 8, a push-button type illumination switch 9, which is turned on and off also with the fingers of the user, is arranged. If the illumination switch 9 is turned on, an illumination tool 10 provided at the front portion of the main body case 6 is turned on. A light emitting diode (LED) is used as the illumination tool 10. If the illumination tool 10 is turned on, a part near a gauge portion 11 provided on the front end portion of the base 2 for aligning with a cut line is brightly illuminated. By brightly illuminating the part near the gauge portion 11 with the illumination tool 10, it is possible to effectively perform a positioning operation (aligning with the cut line) of the material W to be cut in a dark place and to thereby quickly perform a cutting operation with precision.

At the front portion of the main body case 6, a dust collecting port 14 is provided. The dust collecting port 14 is disposed on the upper side of a part (cutting part C) of the cutting blade 5, which is cut into the material W to be cut. The powder dust generated at the cutting part C is blown upwards within the main body case 6 due to the rotation of the cutting blade 5 and is caused to move into the dust collecting port 14. A dust collecting hose 15 is connected to the dust collecting port 14 via a nozzle 15a, and a dust collecting machine (not shown in the drawings) is further connected via the dust connecting hose 15. The majority of the powder dust generated at the cutting part C is collected by the dust collecting machine. A small amount of powder dust that may remain in the main body case 6 without being collected by the dust collecting port 14 is blown rearward within the main body case 6 due to the rotation of the cutting blade 5. The dust collecting port 14 on the side of the main body case 6 corresponds to the upper dust collecting port defined in the claims.

The lower portion of the cutting blade 5 protrudes toward the lower surface side via a window portion 2a provided in the base 2. The lower portion of the cutting blade 5 protruding toward the lower surface side of the base 2 is covered with a movable cover 13. The movable cover 13 is supported so as to rotatable along the circumference of the cutting blade 5. In Fig. 2, when the movable cover 13 is rotated in a clockwise direction and opened, the cutting edge of the cutting blade 5 is exposed. On the other hand, the movable cover 13 is biased by a spring in a closing direction. The movable cover 13 is gradually opened against the biasing force of the spring as the cutting machine 1 moves forwardly with respect to the cut proceeding direction (the right side in Fig. 2) to proceed the cutting operation of the material W to be cut, in a state where the tip end portion of the movable cover 13 contacts the end surface on the cutting side of the material W to be cut. The dust collecting device 20 according to this embodiment has a configuration in which a powder dust receiver 21 is arranged on the lower side of the movable cover 13.

In addition, the cutting machine main body 3 is supported so as to be capable of being vertically tiltable with respect to the base 2, so that a cutting depth of the cutting blade 5 into the material W to be cut (a protruding amount from the lower surface of the base 2) is adjustable, and the cutting machine main body 3 is supported so as to be also capable of being tiltable in the left and right direction, such that the material W to be cut can be cut in a so-called oblique cutting manner. This feature is based on a known technique of the related art, and therefore, the description thereof will be omitted.

The dust collecting device 20 according to this embodiment is provided with the powder dust receiver 21 and a supporting arm 22 supporting it with respect to the base 2. The powder dust receiver 21 has a substantially box-like shape with an opened upper side and includes a bottom plate portion 21a, left and right side wall portions 21b and 21c, and a front wall portion 21d.

The supporting arm 22 is formed by bending a strip-shaped steel plate with a relatively narrow width into a U-shape and is fixed in a state where the supporting arm 22 extends toward the right side from a position closer to the front portion of the base 2. The supporting arm 22 is fixed in a state where the supporting arm 22 perpendicularly intersects with the cut proceeding direction (the front and rear direction) by inserting the upper plate portion 22a into an insertion hole 2b provided in the left side portion, which is closer to the front portion of the base 2, and fixing the tip end portion 22b with a screw tightening type fixing lever 16 provided near the right side portion, which is also closer to the front portion of the base 2. Since the fixed state of the tip end portion 22b is released if the fixing lever 16 is rotated in the screw loosening direction, it is possible to withdraw the upper plate portion 22a to the left side and to thereby remove the dust collecting device 20 from the base 2.

The insertion hole 2b of the base 2 and the fixing lever 16 are provided for mounting a ruler that guides the cutting machine 1 and eventually the cutting blade 5 in a parallel manner with a certain distance from an end surface of the material W to be cut, and this embodiment is characterized in the that the dust collecting device 20 is configured as an attachment type one that uses the insertion hole 2b and the fixing lever 16 used for attaching the ruler (a ruler attachment portion) in order to enable the powder dust receiver 21 to be mounted to and removed from the side of the cutting machine 1 with a simple operation.

A vertical plate portion 22c extends downward from the right end portion of the upper plate portion 22a of the supporting arm 22. A lower plate portion 22d extends rightward from the lower end portion of the vertical plate portion 22c. The lower plate portion 22d extends so as to be parallel to the upper plate portion 22a. The material W to be cut moves into between the upper plate portion 22a and the lower plate portion 22d. For this reason, the length of the vertical plate portion 22c to the lower side (a distance between the upper plate portion 22a and the lower plate portion 22d) is set to a sufficiently long dimension to correspond to an expected plate thickness of the material W to be cut.

A projecting dimension of the upper plate portion 22a to the right side (a projecting dimension from the right end portion of the base 2), namely the distance between the cutting blade 5 and the vertical plate portion 22c is also set to a sufficiently long dimension to correspond to an expected width of the material to be cut on the cutting-off side, which is to be cut off by the cutting operation.

A tubular cylindrical supporting member 24 is attached to the tip end portion (the right end portion) of the lower plate portion 22d via an L-shaped bracket 23. The cylindrical supporting member 24 cannot be displaced in the axial direction with respect to the bracket 23 while being supported so as to be rotatable about the axis.

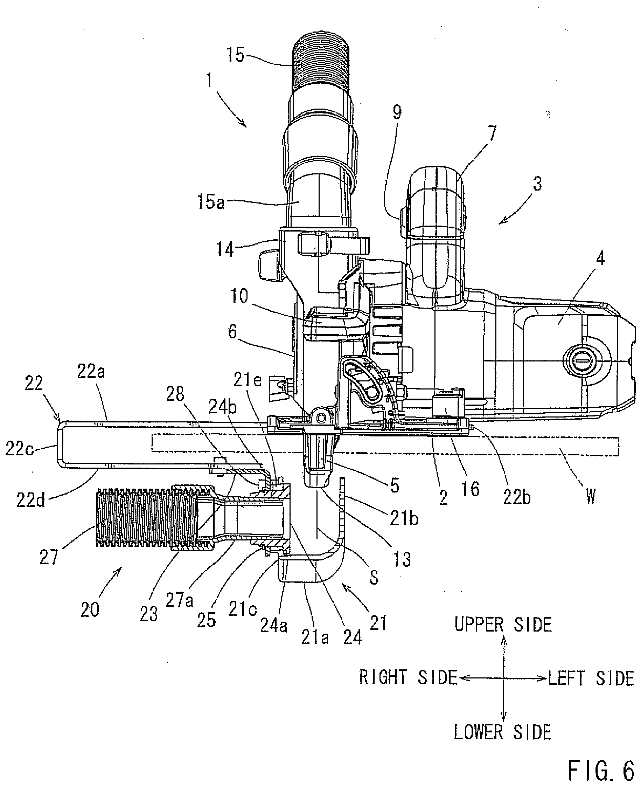

As shown in Fig. 6, a flange portion 24a is provided at the left end portion (the right end portion in Fig. 6) of the cylindrical supporting member 24. A pivot supporting portion 24b is provided between the flange portion 24a and the bracket 23. A boss portion 21e integrally provided with the right side wall portion 21c of the powder dust receiver 21 is rotatably supported by the pivot supporting portion 24b. The boss portion 21e is interposed between the flange portion 24a and the bracket 23 and supported so as not to be displaced in the axial direction.

As the boss portion 21e is pivotally supported by the pivot supporting portion 24b, the powder dust receiver 21 is supported so as to be vertically tiltable with respect to the supporting arm 22. In this way, the cylindrical supporting member 24 is rotatably supported with respect to the bracket 23, the boss portion 21e of the powder dust receiver 21 is rotatably supported by a cylindrical supporting portion 24b of the cylindrical supporting member 24, and the cylindrical supporting member 24 and the powder dust receiver 21 are supported by the supporting arm 22 so as to be rotatable about the same axial line independently of each other. As shown in Fig. 2, a position of the cylindrical supporting member 24 with respect to the front and rear direction and eventually the shape of the bracket 23 are set such that the tilting center of the powder dust receiver 21 (the center axial of the boss portion 21e and the pivot supporting portion 24b) is positioned forwardly of the cutting part C.

In addition, the bracket 23 is held between the boss portion 21e and a retaining ring 25 so as to be coupled not to be relatively displaced in the axial direction. The dust collecting hose 27 is connected to the right end portion of the cylindrical supporting member 24 via the nozzle 27a. The dust collecting hose 27 communicates with the inside of the powder dust receiver 21 through an inner circumferential hole of the cylindrical supporting member 24. The inner circumferential hole of the cylindrical supporting member 24 corresponds to the lower dust collecting port defined in the claims.

A dust collecting machine not shown in the drawings is connected to the dust collecting hose 27. The powder dust in the powder dust receiver 21 is forcibly collected by the dust collecting machine through the dust collecting hose 27 and the inner circumferential hole of the cylindrical supporting member 24.

As described previously, the cylindrical supporting member 24 is fixed so as not to rotate with respect to the bracket 23. The powder dust receiver 21 is supported so as to be vertically tiltable with respect to the cylindrical supporting member 24. A tension spring 26 is interposed between the right side wall 21c of the powder dust receiver 21 and the bracket 23. The powder dust receiver 21 is biased in a direction, in which the tip end side with respect to the tilting movement is displaced upward, by the tension spring 26. As shown in Fig. 2, a stopper block 28 is attached to the right side wall portion 21c of the powder dust receiver 21. The stopper block 28 contacts the bracket 23, and the powder dust receiver 21 is held at an upper receiving position. The receiving position of the powder dust receiver 21 restricted by the stopper block 28 is set to a position where the front wall portion 21d is substantially upright and the bottom plate portion 21a is inclined in a direction slightly downward to the rear side from a horizontal position, as shown in Fig. 2.

The powder dust receiver 21 can be tilted in a direction in which the rear portion side thereof is displaced downward from the upper receiving position (a direction indicated by outline arrow in Fig. 2; hereinafter, referred to as a discharge direction). The powder dust receiver 21 is tilted in the discharge direction against the tension spring 26. In addition, the powder dust receiver 21 is vertically tilted about the axial of the boss portion 21e (the axial of the cylindrical supporting member 24).

As shown in Fig. 6, the powder dust receiver 21 is held on the lower side of the cutting blade 5. For this reason, the left side wall portion 21b is positioned on the left side of the cutting plane S including the cutting blade 5, and the right side wall portion 21c is positioned on the right side. Since the left and right side wall portions 21b and 21c are arranged with a sufficiently large distance described above, and the bottom plate portion 21a is arranged between the lower end portions thereof, it is possible to effectively receive the powder dust scattered to the lower side of the material W to be cut.

Here, on the side of the rear end portion of the cutting blade 5 (the rear side intersecting portion of two front and rear intersecting portions between the material W to be cut and the cutting edge of the cutting blade 5 (the front intersecting portion corresponds to the cutting part C)), a small amount of the powder dust is blown to the lower surface side of the material W to be cut due to contact of the cutting edge of the cutting blade 5 with a kerf of the material W to be cut, for example. In addition, the majority of the powder dust blown upward from the cutting part C is collected by the dust collecting hose 15 through the dust collecting port 14 of the main body case 6, and remaining powder dust, which cannot be collected, is blown to the lower surface side of the material W to be cut after being blown to the rear side within the main body case 6 by the rotation of the cutting blade 5. The powder dust blown to the lower surface side of the material W to be cut is blown downward from the tip end portion of the movable cover 13 through inside of the movable cover 13 that is in the course of opening or in a fully opened state. When the cutting operation proceeds, and the movable cover 13 is in the fully opened state, the powder dust is blown downward from the rear side intersecting portion between the lower surface of the base 2 and the cutting blade 5 (the position of the tip end portion of the movable cover 13) along a tangential direction indicated by axial J in Fig. 2.

In this way, the lengths in the front and rear direction of the bottom plate portion 21a, the left and right side wall portions 21b and 21c of the powder dust receiver 21 are set such that the bottom plate portion 21a, the left and right side wall portions 21b and 21c of the powder dust receiver 21 are positioned on the lower side of the tip end portion of the movable cover 13 throughout the entire open and close range of the movable cover 13. For this reason, also the powder dust blown from the side of the rear portion of the cutting blade 5 to the lower surface side of the material W to be cut can be reliably collected by the powder dust receiver 21.

As shown in Fig. 2, the upper portions of the left and right side wall portions 21b and 21c of the powder dust receiver 21 are respectively formed in arc shapes curved in a direction inclined downward toward the rear side. In addition, as described previously, the powder dust receiver 21 is vertically tiltably supported about the axial of the cylindrical supporting member 24. For this reason, when the cutting process is completed, and the cutting-off side part, which has been cut from the main body side part of the material to be cut, leans against the left and right side wall portions 21b and 21c, the powder dust receiver 21 is tilted in the discharge direction indicated by outlined arrow in Fig. 2 against the biasing force of the tension spring 26 due to the weight thereof. Particularly, the upper portions of the left and right side wall portions 21b and 21c of the powder dust receiver 21 are formed in arc shapes in the direction inclined downward toward the rear side. For this reason, the cutting-off side part of the material to be cut, which leans against the left and right side wall portions 21b and 21c, smoothly slips down on the left and right side wall portions 21b and 21c as the powder dust receiver 21 is tilted in the discharge direction.

Since the cutting-off side part of the material to be cut reliably slips down from the powder dust receiver 21 and is not held in a leaning state as described above, the cutting-off side part is separated by a sufficient distance from the main body side part of the material to be cut after completion of the cutting process, and as a result, the cutting-off side part does not interfere with the movement of the movable cover 13 for returning to a fully closed state, and the movable cover 13 smoothly returns to the fully closed position by the spring biasing force.

According to the dust collecting device 20 of this embodiment configured as described above, it is possible to collect the powder dust generated or scattered on the lower surface side of the material W to be cut substantially directly below the cutting blade 5 by the powder dust receiver 21, to thereby improve the dust collecting function for the cutting machine 1, and thus to further improve the working environment. Particularly, by using the dust collecting functions on the side of the main body case 6 (the dust collecting port 14, the dust collecting hose 15, and the like) together, it is possible to further improve the dust collecting function of the cutting machine 1.

In addition, according to the dust collecting device 20 of this embodiment, the powder dust receiver 21 is supported by the base 2 via the supporting arm 22, and therefore, it is possible to handle this as an integral part with the cutting machine 1 and to thereby further enhance convenience in handling the dust collecting device 20 as compared with the conventional one.

Furthermore, by loosening the fixing lever 16 of the base 2, it is possible to withdraw the upper plate portion 22a of the supporting arm 22 out from the insertion hole 2b and to remove the dust collecting device 20 from the cutting machine 1. Thus, it is possible to remove the dust collecting device 20 if unnecessary, in order to use the cutting machine 1 as a separate machine, and therefore, it is possible to secure the handling property of the cutting machine 1 as a separate machine.

In addition, the dust collecting device 20 according to this embodiment is configured to be attached with the use of the ruler attachment portions of the base 2(the insertion hole 2b and the screw tightening type fixing lever 16), and therefore, it is possible to realize the dust collecting device 20 at a lower cost as compared with the case where a special attachment portion is newly set, and additionally, it is possible to easily attach the dust collecting device 20 later.

In addition, according to the exemplified dust collecting device 20, the powder dust receiver 21 is provided so as to be vertically tiltable while the upper portions of the left and right side wall portions 21b and 21c are formed to have arc shapes curved in the direction inclined downward, and therefore, the cutting-off side part of the material to be cut reliably slips downward without being remained in a state where the cutting-off side part leans against the powder dust receiver 21. For this reason, the cutting-off side part of the material to be cut does not interfere with the returning movement of the movable cover 13 to the fully closed state, and the movable cover is smoothly and reliably returned to the fully closed position due to the spring biasing force.

In addition, the powder dust receiver 21 is supported so as to be vertically tiltable with respect to the cylindrical supporting member 24 to which the dust collecting hose 27 is connected. For this reason, the powder dust receiver 21 can smoothly vertically be tilted without causing the dust collecting hose 27 to be twisted, and therefore, the cutting-off side part of the material to be cut can reliably slip down from the powder dust receiver 21, the powder dust receiver 21 can be reliably returned to the receiving position by the tension spring 26, and it is possible to secure the reliability of the movement of the powder dust receiver 21, in this regard.

Various modifications can be made to the embodiment described above. In relation to the supporting arm 22, for example, it is possible to configure the position of the vertical plate portion 22c in the horizontal direction to be changeable without changing the horizontal position of the powder dust receiver 21 with respect to the cutting blade 5 by configuring the positions of the upper plate portion 22a and the lower plate portion 22d or the lengths thereof to be changeable. By configuring the horizontal position of the vertical plate portion 22c to be changeable, it is possible to easily handle a variation in the width dimension of the cutting-off side part of the material to be cut while the supporting arm 22 is downsized.

In addition, by configuring the length of the vertical plate portion 22c of the supporting arm 22 to be adjustable, it is possible to adjust the vertical position of the powder dust receiver 21 with respect to the cutting blade 5 and to change the distance between the upper plate portion 22a and the lower plate portion 22d in accordance with a variation in the plate thickness of the material W to be cut.

The dust collecting hose 15 connected to the side of the main body case 6 and the dust collecting hose 27 connected to the side of the powder dust receiver 21 can be configured to be connected to each other for connecting to a single dust collecting machine.

The connection of the dust collecting hose 27 and the dust collecting machine to the powder dust receiver 21 may be omitted. In such a case, it is possible to achieve the same functions and effects of collecting dust on the lower surface side of the material to be cut by performing a discharge operation of powder dust received by the powder dust receiver 21 at an appropriate time by the user.

Furthermore, although a configuration was exemplified in which the dust collecting device 20 can completely be removed from the base 2, a configuration is also applicable in which a vertically pivoting function is provided to the supporting arm, for example, such that the powder dust receiver can retreat upward without being removed.

## Claims

1. A cutting machine (1) comprising
a base (2) to be placed on a material to be cut, and
a cutting machine main body (3) that is supported on an upper surface of the base (2) and is provided with a circular cutting blade (5) protruding to a lower surface side of the base (2),
wherein the cutting machine main body (3) is moved together with the base (2) in a cut proceeding direction for performing a cutting operation of a material to be cut,
wherein the base (2) is provided with a ruler attachment portion to which a parallel ruler guiding the cutting blade (5) in a parallel manner with a certain distance from an end surface of the material to be cut is attachable,
wherein the cutting machine further comprises a dust collecting device (20) comprising
a supporting arm (22) formed in a U-shape having an upper plate portion (22a), a lower plate portion (22d) and a vertical plate portion (22c) extending between respective end portions of the upper and lower plate portions (22a, 22d), and
a powder dust receiver (21) configured to be supported on the base (2) via the supporting arm (22), **characterised in that** the power dust receiver has a box-like shape with an opened upper side and includes a bottom plate portion (21a), left and right side wall portions (21b, 21c) and a front wall portion (21d),
wherein the supporting arm (22) is configured to be fixed to the ruler attachment portion by inserting the upper plate portion (22a) into an insertion hole (2b) of the ruler attachment portion and fixing the other end portion of the upper plate portion (22a) with a fixing screw tightening type fixing lever (16) of the ruler attachment portion in a state where the supporting arm (22) perpendicularly intersects with the cut proceeding direction, and
wherein the powder dust receiver (21) is supported via the supporting arm (22) such that the powder dust receiver is held below the cutting blade (5), when the supporting arm (22) is fixed to the ruler attachment portion, such that the left side wall portion (21b) is positioned on the left side of the cutting blade (5) and the right side wall portion (21c) is positioned on the right side of the cutting blade (5).

2. The cutting machine (1) according to claim 1,
wherein the powder dust receiver (21) is adapted to be removably supported by the base (2).

3. The cutting machine (1) according to claim 1 or 2,
wherein the powder dust receiver (21) is vertically tiltably supported.

4. The cutting machine (1) according to any one of claims 1 to 3,
wherein the powder dust receiver (21) is provided with a dust collecting nozzle (27a) for connecting a dust collecting hose (27) and is adapted to be supported so as to be vertically tiltable with respect to the dust collecting nozzle (27a).

5. The cutting machine (1) according to any one of claims 1 to 4,
wherein the powder dust receiver (21) is provided with a lower dust collecting port (24) for connecting with a dust collecting hose (27),
wherein the circumference of the cutting blade (5) is covered with a main body case (6) on a side of an upper surface of the base (2), and
wherein the main body case (6) is provided with an upper dust collecting port (14) for connecting with a dust collecting hose (15).

## Patentansprüche

1. Schneidmaschine (1), mit
einer Basis (2), die auf ein zu schneidendes Material platziert wird, und
einem Schneidmaschinenhauptkörper (3), der auf einer oberen Oberfläche der Basis (2) gelagert ist und mit einem kreisförmigen Schneidblatt (5) vorgesehen ist, das zu einer unteren Oberflächenseite der Basis (2) vorsteht,
bei dem der Schneidmaschinenhauptkörper (3) zusammen mit der Basis (2) in einer Schneidfortschrittsrichtung zum Ausführen eines Schneidvorgangs eines zu schneidenden Materials bewegt wird,
bei dem die Basis (2) mit einem Linealanbringungsbereich vorgesehen ist, an welchen ein Parallellineal, das das Schneidblatt (5) in einer parallelen Weise mit einem bestimmten Abstand von einer Endoberfläche des zu schneidenden Materials führt, anbringbar ist,
bei dem die Schneidmaschine ferner eine Staubsammelvorrichtung (20) aufweist, die
einen Lagerungsarm (22), der in einer U-Form ausgebildet ist, die einen oberen Plattenbereich (22a), einen unteren Plattenbereich (22d) und einen vertikalen Plattenbereich (22c), der sich zwischen den jeweiligen Endbereichen des oberen und des unteren Plattenbereichs (22a, 22d) erstreckt, aufweist, und
eine Pulverstaubaufnahme (21) aufweist, die dazu konfiguriert ist, an der Basis (2) über den Lagerungsarm (22) gelagert zu werden,
**dadurch gekennzeichnet, dass** die Pulverstaubaufnahme eine kastenähnliche Form mit einer geöffneten oberen Seite aufweist und einen Bodenplattenbereich (21a), einen linken und rechten Seitenwandbereich (21b, 21c) und einen vorderen Wandbereich (21d) aufweist,
bei dem Lagerungsarm (22) dazu konfiguriert ist, an den Linealanbringungsbereich durch Einführen des oberen Plattenbereiches (22a) in ein Einführungslock (2b) des Linealanbringungsbereiches und Fixieren des anderen Endbereiches des oberen Platenbereiches (22a) mit einem fixierungsschraubanziehartigen Fixierungshebel (16) des Linealanbringungsbereiches in einem Zustand, in welchem der Lagerungsarm (22) senkrecht mit der Schneidfortschrittsrichtung kreuzt, fixiert zu werden, und
bei dem die Pulverstaubaufnahme (21) über den Lagerungsarm (22) derart gelagert ist, dass die Pulverstaubaufnahme unterhalb des Schneidblattes (5) gehalten ist, wenn der Lagerungsarm (22) an dem Linealanbringungsbereich fixiert ist, so dass der linke Seitenwandbereich (21b) an der linken Seite des Schneidblattes (5) positioniert ist, und der rechte Seitenwandbereich (21c) an der rechten Seite des Schneidblattes (5) positioniert ist.

2. Schneidmaschine (1) nach Anspruch 1, bei dem
die Pulverstaubaufnahme (21) dazu angepasst ist, entfernbar durch die Basis (2) gelagert zu werden.

3. Schneidmaschine (1) nach Anspruch 1 oder 2, bei dem die Pulverstaubaufnahme (21) vertikal neigbar gelagert ist.

4. Schneidmaschine (1) nach einem der Ansprüche 1 bis 3,
bei dem die Pulverstaubaufnahme (21) mit einem Staubsammelstutzen (27a) zum Verbinden eines Staubsammelschlauches (27) vorgesehen ist und dazu angepasst ist, derart gelagert zu werden, das sie in Bezug auf den Staubsammelstutzen (27a) vertikal neigbar ist.

5. Schneidmaschine (1) nach einem der Ansprüche 1 bis 4,
bei dem die Pulverstaubaufnahme (21) mit einer unteren Staubsammelöffnung (24) zum Verbinden mit einem Staubsammelschlauch (27) vorgesehen ist,
bei dem der Umfang des Schneidblatts (5) mit einem Hauptkörpergehäuse (6) an einer Seite einer oberen Oberfläche der Basis (2) abgedeckt ist, und
bei dem der Hauptkörpergehäuse (6) mit einer oberen Staubsammelöffnung (14) zum Verbinden mit einem Staubsammelschlauch (15) vorgesehen ist.

## Revendications

1. Machine de découpe (1) comprenant
une base (2) à placer sur un article à découper, et
un corps principal de machine de découpe (3) qui est supporté sur une surface supérieure de la base (2) et est muni d'une lame de découpe circulaire (5) faisant saillie vers un côté de surface inférieure de la base (2),
dans laquelle le corps principal de machine de découpe (3) est déplacé avec la base (2) dans une direction de découpe pour effectuer une opération de découpe d'un article à découper,
dans laquelle la base (2) est munie d'une partie de fixation de règle à laquelle une règle parallèle guidant la lame de découpe (5) d'une manière parallèle avec une certaine distance d'une surface d'extrémité de l'article à découper peut être fixée,
dans laquelle la machine de découpe comprend en outre un dispositif de collecte de poussière (20) comprenant
un bras-support (22) formé en forme de U ayant une partie de plaque supérieure (22a), une partie de plaque inférieure (22d) et une partie de plaque verticale (22c) s'étendant entre les parties d'extrémité respectives des parties de plaque supérieure et inférieure (22a, 22d), et
un bac de récupération de poussière (21) configuré pour être supporté sur la base (2) par l'intermédiaire du bras-support (22), **caractérisée en ce que**
le bac de récupération de poussière a une forme de boîte avec un côté supérieur ouvert et comprend une partie de plaque inférieure (21a), des parties de paroi latérale gauche et droite (21b, 21c) et une partie de paroi avant (21d),
dans laquelle le bras-support (22) est configuré pour être fixé à la partie de fixation de règle en insérant la partie de plaque supérieure (22a) dans un orifice d'insertion (2b) de la partie de fixation de règle et en fixant l'autre partie d'extrémité de la partie de plaque supérieure (22a) avec un levier de fixation à vis de serrage (16) de la partie de fixation de règle dans un état où le bras-support (22) coupe perpendiculairement avec la direction de découpe, et
dans laquelle le bac de récupération de poussière (21) est supporté par l'intermédiaire du bras-support (22) de telle sorte que le bac de récupération de poussière est maintenu sous la lame de découpe (5), lorsque le bras-support (22) est fixé à la partie de fixation de règle, de telle sorte que la partie de paroi latérale gauche (21b) est positionnée du côté gauche de la lame de découpe (5) et que la partie de paroi latérale droite (21c) est placée du côté droit de la lame de découpe (5).

2. Machine de découpe (1) selon la revendication 1,
dans laquelle le bac de récupération de poussière (21) est adapté pour être supporté de manière amovible par la base (2).

3. Machine de découpe (1) selon la revendication 1 ou 2,
dans laquelle le bac de récupération de poussière (21) est supporté verticalement de manière à pouvoir basculer.

4. Machine de découpe (1) selon l'une quelconque des revendications 1 à 3,
dans lequel le bac de récupération de poussière (21) est muni d'une buse de collecte de poussière (27a) pour connecter un tuyau de collecte de poussière (27) et est adapté pour être supporté de manière à pouvoir basculer verticalement par rapport à la buse de collecte de poussière (27a).

5. Machine de découpe (1) selon l'une quelconque des revendications 1 à 4,
dans lequel le bac de récupération de poussière (21) est muni d'un orifice inférieur de collecte de poussière (24) destiné à être connecté à un tuyau de collecte de poussière (27),
dans laquelle la circonférence de la lame de découpe (5) est recouverte d'un boîtier de corps principal (6) sur un côté d'une surface supérieure de la base (2), et
dans lequel le boîtier de corps principal (6) est muni d'un orifice supérieur de collecte de poussière (14) pour la connexion avec un tuyau de collecte de poussière (15).
